# EUROPÄISCHE PATENTSCHRIFT

(11) **EP 3 996 934 B1**
(45) Veröffentlichungstag und Bekanntmachung des Hinweises auf die Patenterteilung: **02.10.2024**
(21) Anmeldenummer: 20757275.1
(22) Anmeldetag: 13.08.2020
(51) Int. Cl.: B42D 25/475, B23K 26/08, B23K 26/10, B23K 26/142, B23K 26/38, B26F 1/31, B26F 3/16

(54) **VORRICHTUNG UND VERFAHREN FÜR DEN RANDBESCHNITT EINES ROHLINGS EINES KARTENFÖRMIGEN AUSWEIS-, WERT- ODER SICHERHEITSDOKUMENTS**
DEVICE AND METHOD FOR THE EDGE TRIMMING OF A BLANK OF A CARD-SHAPED IDENTIFICATION DOCUMENT, DOCUMENT OF VALUE OR SECURITY DOCUMENT
DISPOSITIF ET PROCÉDÉ DE ROGNAGE DE BORD D'UNE ÉBAUCHE D'UN DOCUMENT D'IDENTIFICATION EN FORME DE CARTE, DOCUMENT DE VALEUR OU DOCUMENT DE SÉCURITÉ

(30) Priorität: 19.08.2019 DE 102019122157
(43) Veröffentlichungstag der Anmeldung: 18.05.2022
(73) Patentinhaber: Bundesdruckerei GmbH, 10969 Berlin (DE)
(72) Erfinder: GÜMMER, Andreas, 27308 Hohenaverbergen (DE); MAUDERER, Michael, 81825 München (DE); KLIEFOTH, Rüdiger, 30952 Ronnenberg (DE); ADORF, Dirk, 31167 Bockenem (DE)
(74) Vertreter: Hentrich Patent- & Rechtsanwaltspartnerschaft mbB
(86) Internationale Anmeldenummer: PCT/EP2020/072709
(87) Internationale Veröffentlichungsnummer: WO 2021/032579

(56) Entgegenhaltungen:
- EP-A2- 1 433 561

## Beschreibung

Die Erfindung betrifft eine Vorrichtung für den Randbeschnitt eines Rohlings eines kartenförmigen Ausweis-, Wert- oder Sicherheitsdokuments, wobei der Rohling mindestens zwei parallele Oberflächen und eine die beiden Oberflächen miteinander verbindende Seitenkante umfasst. Die Erfindung betrifft ferner ein Verfahren für den Randbeschnitt bzw. zum Randbeschneiden eines Rohlings eines kartenförmigen Ausweis-, Wert- oder Sicherheitsdokuments.

Kartenförmige Ausweis-, Wert- oder Sicherheitsdokumente dienen dazu, die Identität einer Person oder Sache oder einen Anspruch, beispielsweise auf Zahlung eines Geldbetrages oder auf Herausgabe eines Produktes oder Erbringung einer Dienstleistung, zu verifizieren.

Vorzugsweise liegt das kartenförmige Ausweis,- Wert- oder Sicherheitsdokument in ID 1-, ID 2-, ID 3- oder in irgendeinem anderen Format vor, beispielsweise in als Bestandteil eines Heftes, wie bei einem passähnlichen Gegenstand. Das kartenförmige Ausweis-, Wert- oder Sicherheitsdokument ist im Allgemeinen ein Laminat aus mehreren Dokumentenlagen, die passgenau unter Wärmeeinwirkung und unter erhöhtem Druck flächig miteinander zu einem Monolithen verbunden sind. Diese Dokumente sollen den normierten Anforderungen genügen, beispielsweise ISO 10373, ISO/IEC 7810, ISO 14443.

Vorzugsweise bestehen die Dokumentenlagen aus einem Trägermaterial, das sich für eine Lamination eignet. Das Ausweis-, Wert- oder Sicherheitsdokument kann aber vorzugsweise aus einem Polymer gebildet sein, das ausgewählt ist aus einer Gruppe, umfassend Polycarbonat (PC), insbesondere Bisphenol A-Polycarbonat oder ein Polycarbonat, gebildet mit einem geminal disubstituierten Bis-(hydroxyphenyl)-cycloalkan, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier und/oder Pappe und/oder Glas und/oder Metall und/oder Keramik. Außerdem kann das Dokument auch aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Dokument aus drei bis zwölf, vorzugsweise vier bis zehn Folien, hergestellt, wobei zunächst ein Rohling vorliegt, der auf das Endmaß abgelängt wird. Alle Folien können Druckschichten tragen. Ein solcherart gebildetes Laminat kann abschließend ein- oder beidseitig mit dem Schutz- oder Decklack oder mit einer Folie überzogen werden. Die Folie kann insbesondere eine Kratzschutzfolie sein. Derart gebildete Overlaylagen schützen ein darunter angeordnetes Sicherheitsmerkmal und/oder verleihen dem Dokument die erforderliche Abriebfestigkeit.

Zur Fertigstellung des Ausweis-, Wert- oder Sicherheitsdokuments, mithin zum Ablängen eines Rohlings auf das Endmaß des Ausweis-, Wert- oder Sicherheitsdokuments, ist es bekannt, den Rohling zu stanzen.

Beim Stanzen des Rohlings auf das Endmaß entsteht ein Grat an der Stanzstelle. In Abhängigkeit der Kartengröße variiert auch die Presskraft für das Stanzwerkzeug, was im Umkehrschluss auch eine Variation der Abmessung für die Stanzpressen bedeutet. Dies ist sehr kostenintensiv. Bei abgenutzten Stanzwerkzeugen ist der entstehende Grad deutlich ausgeprägter als dies bei neuwertigen oder neu aufbereiteten Stanzen der Fall ist.

Aus der DE 102 61 667 A1 ist daher bekannt, dass Kunststoffkarten, wie sie üblicherweise für Ausweis-, Wert- oder Sicherheitsdokumente Einsatz finden, auch mit einer Laserschneideinrichtung zugeschnitten werden können. Es hat sich jedoch herausgestellt, dass beim Laserbeschnitt Schmauchspuren und Verbrennungsrückstände auf dem Kartenmaterial entstehen, die sich nur aufwendig wieder entfernen lassen.

Die EP 1 433 561 A2 beschreibt eine Laserschneideinrichtung, mit welcher im Zentrum eines Werkstücks ein Stück herausgeschnitten wird.

DE 102 61 667 A1 und EP 1 433 561 A2 nehmen dieselbe Priorität in Anspruch.

EP 1 433 561 A2 offenbart den Oberbegriff des Anspruchs 1.

Es ist daher die Aufgabe der vorliegenden Erfindung, eine Vorrichtung und ein Verfahren für den Randbeschnitt eines Rohlings eines kartenförmigen Ausweis-, Wert- oder Sicherheitsdokuments anzugeben, die den erwähnten Nachteilen Rechnung tragen.

Diese Aufgabe wird gelöst durch eine Vorrichtung mit dem Merkmalsbestand des Anspruchs 1 und durch ein Verfahren mit den Merkmalen des Anspruchs 7. Vorteilhafte Ausgestaltungen mit zweckmäßigen Weiterbildungen der Erfindung sind in den abhängigen Ansprüchen angegeben.

Die Vorrichtung für den Randbeschnitt eines Rohlings eines kartenförmigen Ausweis-, Wert- oder Sicherheitsdokuments zeichnet sich insbesondere durch eine Halteeinrichtung zur Aufnahme des Rohlings aus, die ausgebildet ist, den Rohling zumindest bereichsweise für den Randbeschnitt freizuhalten. Sie umfasst ferner eine Laserschneideinrichtung, die ausgebildet ist, einen Laserstrahl derart zu emittieren, dass er auf einer vorgegebenen Schnittlinie eines Beschnittbereichs des Rohlings fokussiert auftrifft. Die Vorrichtung umfasst außerdem eine Inertgaseinrichtung, die ausgebildet ist, mindestens einen Inertgasstrom an den Beschnittbereich zuzuleiten, wobei die in Inertgaseinrichtung einen auf die Eine der Oberflächen gerichteten ersten Zuführkanal für Inertgas und einen auf die Andere der Oberflächen gerichteten zweiten Zufuhrkanal für Inertgas umfasst.

Damit ist also die beidseitige Bestrahlung des Beschnittbereichs mit Inertgas gewährleistet, so dass Schmauch- und Verbrennungsrückstände verstärkt von der der Schnittlinie entfernt werden.

Es hat sich als sinnvoll erwiesen, wenn der erste Zuführkanal derart ausgerichtet ist, dass der Inertgasstrom um einen Winkel geneigt gegenüber der Normalen der Oberflächen in dem Beschnittbereich des Rohlings auftrifft. Damit erhöht sich die Scherkraft, die ein erster Inertgasstrom auf Rückstände an der Oberfläche des Rohlings ausübt. Aus dem gleichen Grunde ist es sinnvoll, wenn alternativ oder ergänzend auch der zweite Zuführkanal derart ausgerichtet ist, dass der Inertgasstrom um einen Winkel geneigt gegenüber der Normalen der Oberflächen in dem Beschnittbereich des Rohlings auftrifft.

Um entstehenden Schmauch oder auch Verbrennungspartikel mit den Inertgasströmen auf den Bereich der Oberfläche zu drängen, der dem Beschnittabfall entspricht, ist es sinnvoll, wenn der erste Zuführkanal derart ausgerichtet ist, dass der Inertgasstrom bezüglich der Schnittlinie nach innen geneigt und von dem entstehenden Beschnittabfall abgewandt zugeleitet ist. Alternativ oder ergänzend ist es möglich, dass auch der zweite Zuführkanal derart ausgerichtet ist, dass der Inertgasstrom bezüglich der Schnittlinie nach innen geneigt und von dem entstehenden Beschnittabfall abgewandt zugeleitet ist. Somit wird das spätere, auf Endmaß beschnittene Ausweis-, Wert- oder Sicherheitsdokument von Schmauchrückständen zumindest weitestgehend freigehalten, da diese lediglich noch im Bereich des Beschnittabfalls anhaften können. Schmauch und Verbrennungsrückstände liegen daher an Bereichen der Oberflächen des Rohlings an, die ohnehin der Entsorgung oder auch dem Recycling zugeführt werden.

Um Schmauch oder entsprechende Partikel noch stärker in Bereiche des Beschnittabfalls zu ziehen oder zu saugen, ist es sinnvoll, wenn eine Absaugeinrichtung vorhanden und ausgebildet ist, Partikel und/oder Gase seitenkantenseitig abzusaugen. Seitenkantigseitig bedeutet im Wesentlichen senkrecht zur Normalen der Oberflächen des Rohlings, insbesondere benachbart zur die Oberflächen miteinander verbindenden Seitenkante.

Um einen umlaufenden Beschnitt des Rohlings betriebssicher zu gewährleisten, hat es sich als vorteilhaft erwiesen, wenn der Halteeinrichtung und/oder der Laserschneideinrichtung eine, insbesondere elektromotorisch angetriebene, Antriebseinrichtung zugeordnet ist, die für den Randbeschnitt des Rohlings derart ausgebildet ist, eine Relativbewegung zwischen der Halteeinrichtung und dem Laserstrahl zu bewirken.

Die Laserschneideinrichtung umfasst beispielsweise zur Erzeugung des Laserstrahls einen üblichen CO₂-Laser mit einer Leistung von 100 Watt (W), wobei die Hauptbestandteile eines Lasers wie Pumpquelle, Spiegel (Resonator), gegebenenfalls vorhandene Güte-Schalter (Q-Switch) oder dergleichen als bekannt vorausgesetzt werden und daher nicht mehr im Einzelnen erläutert werden. Zur Fokussierung des Laserstrahls kann eine einfache Linse Verwendung finden, die das üblicherweise verwendete Objektiv (zum Beispiel F-Theta-Objektiv) repräsentiert. Als Antriebseinrichtung, insbesondere zur Führung des Laserstrahls, kann ein steuerbares System verwendet werden, welches beispielsweise einen Galvanoscanner darstellt, der in zwei Richtungen bewegliche Umlenkspiegel umfasst. Die Steuerung erfolgt dabei mit einer geeigneten Steuereinrichtung.

Wenn der Halteeinrichtung die Antriebseinrichtung zugeordnet ist, so kann diese als eine einfache Vorschubeinrichtung gebildet sein, die ebenfalls in zwei Richtungen, beispielsweise in X- und Y-Richtung, beweglich ist. Um die Fokussierung am Rohling entsprechend anzupassen, ist gegebenenfalls die zusätzliche Möglichkeit geschaffen, dass eine dritte Verstellrichtung, beispielsweise in Z-Richtung vorhanden ist.

Um gezielt am Punkt des Schnittes Rauch oder Schmauch abzusaugen, hat es sich als sinnvoll erwiesen, wenn dem ersten Zuführkanal und/oder dem zweiten Zuführkanal der Inertgaseinrichtung eine, insbesondere elektromotorisch verstellbare Manipulationseinrichtung zugeordnet ist, die derart ausgebildet ist, dass der Inertgasstrom dem Fokus des Laserstrahls während des Randbeschnittes folgt.

Das Verfahren zum Randbeschneiden eines Rohlings eines kartenförmigen Ausweis-, Wert- oder Sicherheitsdokuments, wobei der Rohling mindestens zwei parallele Oberflächen und eine die beiden Oberflächen miteinander verbindende Seitenkante aufweist, umfasst insbesondere die folgenden Schritte:
- Platzieren des Rohlings in einer Halteeinrichtung derart, dass der Rohling zumindest bereichsweise für den Randbeschnitt, vorzugsweise entlang der gesamten Schnittlinie, frei bleibt,
- Fokussieren eines von der Laserschneideinrichtung emittierten Laserstrahls derart, dass er auf eine vorgegebene Schnittlinie eines Beschnittbereichs des Rohlings auftrifft,
- zeitgleich Zuleiten eines Inertgases an den Beschnittbereich mittels einer Inertgaseinrichtung, wobei ein erster Inertgasstrom auf die Eine der Oberflächen mittels eines ersten Zuführkanals geleitet wird, und wobei ein zweiter Inertgasstrom auf die Andere der Oberflächen mittels eines zweiten Zuführkanals geleitet wird.

Der Fokus des Laserstrahls wird dann entlang der Schnittlinie bewegt, bis der Rohling auf das Endmaß beschnitten ist. Durch dieses Verfahren ist der Vorteil gegeben, dass Schmauch und Rauch beidseitig durch das Spülgas vom eigentlichen kartenförmigen Ausweis-, Wert- oder Sicherheitsdokument ferngehalten werden können.

Auch hier ist die Möglichkeit eröffnet, dass der erste Inertgasstrom und/oder der zweite Inertgasstrom unter einem Winkel geneigt gegenüber der Normalen der Oberflächen in dem Beschnittbereich des Rohlings auftrifft. Damit lässt sich eine größere Scherkraft auf anhaftende Partikel oder Schmutz ausüben, sodass diese leichter von den Oberflächen mittels des Inertgasstroms abgetragen werden können.

Es ist von Vorteil, wenn der erste Inertgasstrom und/oder der zweite Inertgasstrom bezüglich der Schnittlinie nach innen geneigt und von dem entstehenden Beschnittabfall abgewandt zugeleitet werden. Somit wird Rauch und Schmauch verstärkt in Bereiche des Beschnittabfalls gedrängt, sodass das eigentliche Ausweis-, Wert- oder Sicherheitsdokument von diesen weitestgehend freigehalten ist. Entsprechende Nachbearbeitungen können daher entfallen.

Insgesamt ist die Möglichkeit eröffnet, dass auch der Laserstrahl unter einem Winkel geneigt gegenüber der Normalen der Oberflächen auf dem Rohling auftrifft, sodass dies zu einer Art Verrundung der Kante des beschnittenen Ausweis-, Wert- oder Sicherheitsdokuments führt, was eine verbesserte Haptik für einen Benutzer bietet. Hierbei lassen sich auch komplexere dreidimensionale Geometrien an der Kante realisieren, wobei dann auch Sicherheitsmerkmale durch diese 3D-Formgebung geschaffen werden können.

Das Verfahren kann auch den weiteren Schritt des Ablösens einer Schutzfolie umfassen, wenn ein mit einer Schutzfolie versehener Rohling am Rand auf das Endmaß des kartenförmigen Ausweis-, Wert- oder Sicherheitsdokuments beschnitten ist. Die Schutzfolie schützt vor weiteren Schmauchspuren auf dem späteren, eigentlichen Ausweis-, Wert- oder Sicherheitsdokument.

Die in Verbindung mit der Vorrichtung und in Verbindung mit dem Verfahren erwähnten Vorteile und vorteilhafte Ausgestaltungen wirken sich auch vorteilhaft auf ein Ausweis-, Wert- oder Sicherheitsdokument aus, das mit einem entsprechenden Verfahren oder einer solchen Vorrichtung hergestellt wurde.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:
- Fig. 1: eine perspektivische Ansicht eines kartenförmigen Ausweis-, Wert- oder Sicherheitsdokuments,
- Fig. 2: ein Rohling des Ausweis-, Wert- oder Sicherheitsdokuments aus Figur 1, und
- Fig. 3: eine Vorrichtung für den Randbeschnitt des Rohlings aus Figur 2.

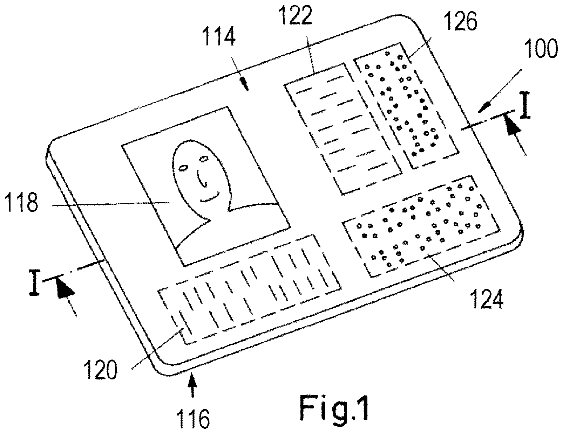

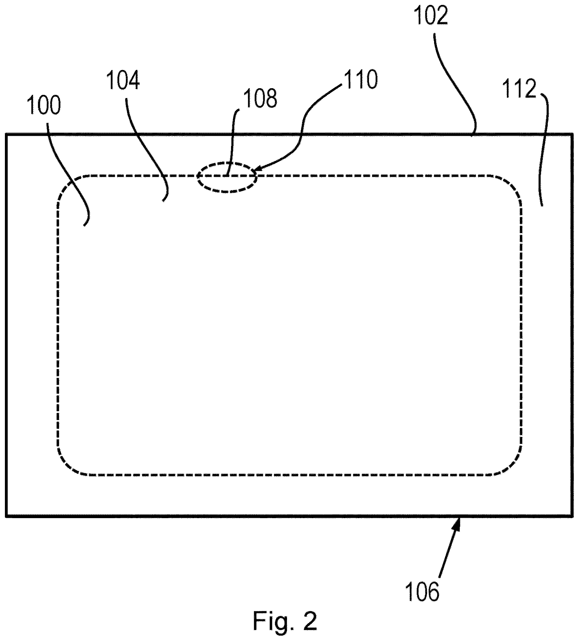

In Figur 1 ist ein kartenförmiges Ausweis-, Wert- oder Sicherheitsdokument 100 gezeigt, welches aus einem auf ein Endmaß beschnittenen Rohling 102 hergestellt wurde (Fig. 2). Das Ausweis-, Wert- oder Sicherheitsdokument 100 kann ein Personaldokument, wie ein Reisepass, ein Personalausweis, ein Zugangsausweis oder dergleichen, eine Scheckkarte oder eine Banknote oder noch ein anderes Dokument, sein. Alle nachfolgenden Beispiele werden stellvertretend für andere Dokumententypen anhand einer derartigen Karte beschrieben.

Das Ausweis,- Wert- oder Sicherheitsprodukt 100 ist vorliegend in Form einer Identitätskarte dargestellt, die beispielsweise zu einem Grundkörper in Form eines Laminats aus mehreren innenliegenden Polymerlagen zusammengefügt worden ist. Beispielsweise können die Polymerlagen aus PC und/oder PET bestehen. Die einzelnen Lagen können ungefüllt oder mit Füllstoffen gefüllt sein. In letzterem Falle sind sie opak, ansonsten transparent. Die Lagen können vorzugsweise derart miteinander verbunden sein, dass sie einen monolithischen Block bilden, der praktisch nicht gespalten werden kann. Im fertigen Laminat sind typischerweise die Grenzflächen nicht mehr sichtbar. Die äußeren Schichten der Karte können als eine abschließende Kunststoff-Schutzfolie gebildet sein oder aus einem Schutzlack bestehen, der nach dem Laminieren auf die Karte aufgetragen worden ist. Die Kunststoff-Schutzfolie bzw. der Schutzlack ist transparent, sodass darunter liegende Informationen von außen sichtbar sind. Insbesondere bleiben dabei aber eine oder mehreren Druckschichten bspw. eines Portraitbilds sichtbar, die vorzugsweise unmittelbar neben oder hinter der äußeren Schicht angeordnet ist bzw. angeordnet sind.

Das Ausweis,- Wert- oder Sicherheitsdokument 100 weist eine Oberseite 114 und eine Unterseite 116 auf. Auf der Oberseite 114 befinden sich das Gesichts- oder Portraitbild 118 des Inhabers der Karte sowie vier Datenfelder, nämlich ein erstes Datenfeld 120, ein zweites Datenfeld 122 mit Karten- und Inhaberdaten in Klarschrift sowie ein drittes Datenfeld 124 und ein viertes Datenfeld 126 mit den Karten- und Inhaberdaten in Blindenschrift, beispielsweise Braille-Schrift. Das dritte Datenfeld 124 gibt die Daten des ersten Datenfeldes 122 in der Blindenschrift an, und das vierte Datenfeld 126 gibt die Daten des zweiten Datenfeldes 122 ebenfalls in der Blindenschrift an. Die Daten im ersten und im zweiten Datenfeld 120, 122 sind durch Druckschichten hergestellt, die auf einer äußeren Lage des Dokuments, aber unmittelbar unter der außenliegenden Schutzschicht liegen.

In Figur 2 ist der Rohling 102 des Kartenförmigen Ausweis-, Wert- oder Sicherheitsdokuments 100 gezeigt, wobei der Rohling eine strichliiert dargestellte Schnittlinie 108 umfasst, die nicht grafisch dargestellt sein muss, sondern auch steuerungstechnisch in der Lasersteuerung (digital) hinterlegt sein kann. Entlang dieser Schnittlinie 108 wird der Laserstrahl verfahren, um den Rohling 102 auf das Endmaß des Ausweis-, Wert- oder Sicherheitsdokuments 100 zu beschneiden.

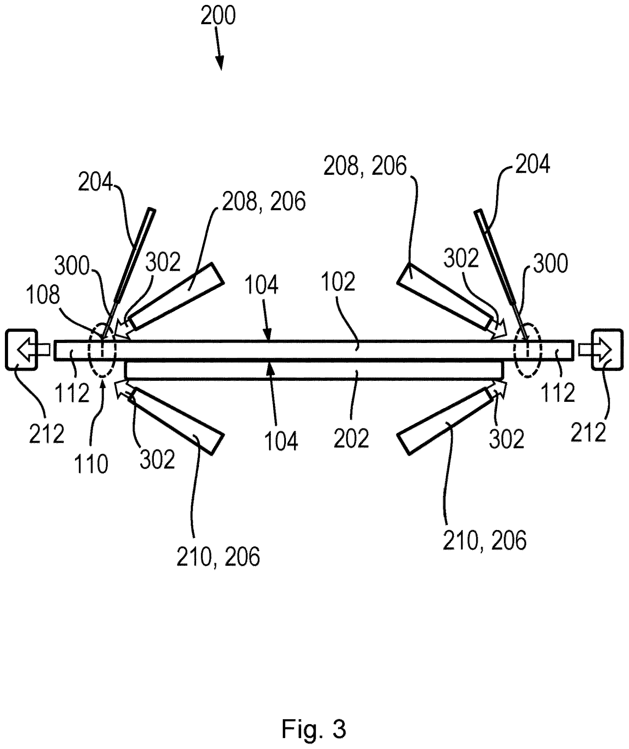

In Figur 3 ist eine Vorrichtung 200 für den Randbeschnitt des Rohlings 102 auf sein Endmaß illustriert. Der Rohling 102 zeigt vorliegend zwei parallele Oberflächen 104 und eine die beiden Oberflächen 104 miteinander verbindende Seitenkante 106. Der Rohling 102 ist in einer Halteeinrichtung 202 zur Aufnahme des Rohlings 102 derart aufgenommen, dass der Rohling 102 zumindest bereichsweise für den Randbeschnitt, vorliegend vollständig umlaufend frei bleibt. Die Halteeinrichtung 202 kann beispielsweise aus einer Halteplatte gebildet sein. Gegebenenfalls kann durch die Halteeinrichtung 202 eine entsprechende Fixierung des Rohlings 102 erfolgen.

Die Vorrichtung 200 umfasst eine Laserschneideinrichtung 204, die ausgebildet ist, einen Laserstrahl 300 derart zu emittieren, dass er auf der vorgegebenen Schnittlinie 108 des Beschnittbereichs 110 des Rohlings 102 fokussiert auftrifft. Die Laserschneideinrichtung 204 ist beispielsweise ein CO₂-Laser, wobei seine weiteren Hauptbestandteile als bekannt vorausgesetzt werden und daher nicht nochmals näher dargestellt sind. Der Laserstrahl 300 kann senkrecht auf eine der beiden Oberflächen 104 des Rohlings 102, insbesondere auf der Schnittlinie 108 im Beschnittbereich 110 des Rohlings 102 auftreffen. Damit verläuft der Laserstrahl 300 parallel oder entlang der Normalen der Oberflächen 104. Es besteht aber auch die in der Figur gezeigte vorteilhafte Möglichkeit, dass der Laserstrahl 300 um einen Winkel geneigt gegenüber der Normalen der Oberfläche 104 in dem Beschnittbereich 110 auf der Schnittlinie 108 des Rohlings 102 auftrifft. Damit entsteht eine für den Benutzer angenehme Verrundung der Kanten des späteren Ausweis-, Wert- oder Sicherheitsdokuments 100.

Um zu gewährleisten, dass das Ausweis-, Wert- oder Sicherheitsdokument 100 möglichst wenig nachzubearbeiten ist, ist zusätzlich eine Inertgaseinrichtung 206 vorhanden, die ausgebildet ist, mindestens einen Inertgasstrom 302 an den Beschnittbereich 110 zuzuleiten. Vorliegend umfasst die Inertgaseinrichtung 206 einen auf die Eine der Oberflächen 104 gerichteten ersten Zuführkanal 208 für Inertgas und einen auf die Andere der Oberflächen 104 gerichteten zweiten Zuführkanal 210 für Inertgas. Somit wird also ein erster Inertgasstrom 302 auf die Eine der Oberflächen 164 mittels des ersten Zuführkanals 208 geleitet und ein zweiter Inertgasstrom 302 auf die Andere der Oberflächen 104 mittels des zweiten Zuführkanals 210 geleitet.

Der erste Zuführkanal 208 und der zweite Zuführkanal 210 sind derart ausgerichtet, dass die Inertgasströme 302 um einen Winkel geneigt gegenüber der Normalen der Oberflächen 104 in den Beschnittbereich 110 des Rohlings 102 auftreffen. Die Inertgasströme 302 sind dabei bezüglich der Schnittlinie 108 nach innen geneigt, d. h. in Richtung des Zentrums des Ausweis-, Wert- oder Sicherheitsdokuments 100. Der Inertgasstrom 302 ist dabei also bezüglich der Schnittlinie 108 nach innen geneigt und von dem entstehenden Beschnittabfall 112 abgewandt zugeleitet. Somit wird Schmauch oder Verbrennungsrückstände nach außen in Richtung des Beschnittabfalls 112 gedrückt, sodass das eigentliche, innenliegende Ausweis-, Wert- oder Sicherheitsdokument 100 zumindest weitestgehend davon frei bleibt. Um dies zusätzlich zu gewährleisten, kann der Rohling 102 auch im Vorfeld mit einer Laserschutzfolie versehen sein, die nach dem Beschnittvorgang abgelöst wird.

Um den Rohling 102 am Rand zu beschneiden ist dieser zunächst in der Halteeinrichtung 202 zu platzieren, sodass er umlaufend für den Randbeschnitt frei bleibt. Anschließend wird der von der Laserschneideinrichtung 204 emittierte Laserstrahl 300 derart fokussiert, dass er auf der vorgegebenen Schnittlinie 108 des Beschnittbereichs 110 des Rohlings 102 auftrifft. Zeitgleich wird das Inertgas, beispielsweise Stickstoff, Argon, Helium oder dergleichen, mittels der Inertgaseinrichtung 206 an den Beschnittbereich 110 geführt, wobei der erste Inertgasstrom 302 auf die Eine der Oberflächen 104 mittels des ersten Zuführkanals 208 geleitet wird, und wobei der zweite Inertgasstrom 302 auf die Andere der Oberflächen 104 mittels des zweiten Zuführkanals 210 geleitet wird. Anschließend wird der geschnittene Rohling 102 aus der Halteeinrichtung 202 entnommen und die gegebenenfalls vorhandene Schutzfolie noch abgelöst. Damit liegt das fertige Ausweis-, Wert- oder Sicherheitsdokument 100 vor.

Mit der vorliegenden Erfindung lassen sich die Herstellzeiten und damit die Herstellkosten für Ausweis-, Wert- oder Sicherheitsdokumente 100 drastisch reduzieren, da deutlich weniger Arbeitsschritte notwendig werden für eine Nachbearbeitung des beschnittenen Rohlings 102.

### BEZUGSZEICHENLISTE

- 100: Ausweis-, Wert- oder Sicherheitsdokument
- 102: Rohling
- 104: Oberfläche
- 106: Seitenkante
- 108: Schnittlinie
- 110: Beschnittbereich
- 112: Beschnittabfall
- 114: Oberseite
- 116: Unterseite
- 118: Portraitbild
- 120: erstes Datenfeld
- 122: zweites Datenfeld
- 124: drittes Datenfeld
- 126: viertes Datenfeld
- 200: Vorrichtung für den Randbeschnitt
- 202: Halteeinrichtung
- 204: Laserschneideinrichtung
- 206: Inertgaseinrichtung
- 208: erster Zuführkanal
- 210: zweiter Zuführkanal
- 212: Absaugeinrichtung
- 300: Laserstrahl
- 302: Inertgasstrom

## Patentansprüche

1. Vorrichtung (200) für den Randbeschnitt eines Rohlings (102) eines kartenförmigen Ausweis-, Wert- oder Sicherheitsdokuments (100), wobei der Rohling (102) mindestens zwei parallele Oberflächen (104) und eine die beiden Oberflächen (104) miteinander verbindende Seitenkante (106) umfasst,
mit einer Halteeinrichtung (202) zur Aufnahme des Rohlings (102) derart, dass der Rohling (102) zumindest bereichsweise für den Randbeschnitt frei bleibt,
mit einer Laserschneideinrichtung (204), die ausgebildet ist, einen Laserstrahl (300) derart zu emittieren, dass er auf einer vorgegebenen Schnittlinie (108) eines Beschnittbereichs (110) des Rohlings (102) fokussiert auftrifft,
sowie mit einer Inertgaseinrichtung (206), die ausgebildet ist, mindestens einen Inertgasstrom (302) an den Beschnittbereich (110) zuzuleiten, wobei die Inertgaseinrichtung (206) einen auf die Eine der Oberflächen (104) gerichteten ersten Zuführkanal (208) für Inertgas umfasst, die Vorrichtung ist **dadurch gekennzeichnet, dass** die Inertgaseinrichtung (206) einen auf die Andere der Oberflächen (104) gerichteten zweiten Zuführkanal (210) für Inertgas umfasst.

2. Vorrichtung (200) nach Anspruch 1, **dadurch gekennzeichnet, dass** der erste Zuführkanal (208) und/oder der zweite Zuführkanal (210) derart ausgerichtet ist, dass der Inertgasstrom (302) um einen Winkel geneigt gegenüber der Normalen der Oberflächen (104) in dem Beschnittbereich (110) des Rohlings (102) auftrifft.

3. Vorrichtung (200) nach Anspruch 2, **dadurch gekennzeichnet, dass** der erste Zuführkanal (208) und/oder der zweite Zuführkanal (210) derart ausgerichtet ist, dass der Inertgasstrom (302) bezüglich der Schnittlinie (108) nach innen geneigt und von dem entstehenden Beschnittabfall (112) abgewandt zugeleitet ist.

4. Vorrichtung (200) nach einem der Ansprüche 1 bis 3, **dadurch gekennzeichnet, dass** eine Absaugeinrichtung (212) vorhanden und ausgebildet ist, Partikel und/oder Gase seitenkantenseitig abzusaugen.

5. Vorrichtung (200) nach einem der Ansprüche 1 bis 4, **dadurch gekennzeichnet, dass** der Halteeinrichtung (202) und/oder der Laserschneideinrichtung (204) eine Antriebseinrichtung zugeordnet ist, die für den Randbeschnitt des Rohlings (102) ausgebildet ist, eine Relativbewegung zwischen der Halteeinrichtung (202) und dem Laserstrahl (300) zu bewirken.

6. Vorrichtung (200) nach einem der Ansprüche 1 bis 5, **dadurch gekennzeichnet, dass** dem ersten Zuführkanal (208) und/oder dem zweiten Zuführkanal (210) der Inertgaseinrichtung (206) eine verstellbare Manipulationseinrichtung zugeordnet ist, die derart ausgebildet ist, dass der Inertgasstrom (302) dem Fokus des Laserstrahls (300) während des Randbeschnittes folgt.

7. Verfahren zum Randbeschneiden eines Rohlings (102) eines kartenförmigen Ausweis-, Wert- oder Sicherheitsdokuments (100), wobei der Rohling (102) mindestens zwei parallele Oberflächen (104) und eine die beiden Oberflächen (104) miteinander verbindende Seitenkante (106) aufweist, umfassend die Schritte:
- Platzieren des Rohlings (102) in einer Halteeinrichtung (202) derart, dass der Rohling (102) zumindest bereichsweise für den Randbeschnitt frei bleibt,
- Fokussieren eines von einer Laserschneideinrichtung (204) emittierten Laserstrahls (300) derart, dass er auf einer vorgegebenen Schnittlinie (108) eines Beschnittbereichs (110) des Rohlings (102) auftrifft,
- zeitgleich Zuleiten eines Inertgases an den Beschnittbereich (110) mittels einer Inertgaseinrichtung (206), wobei ein erster Inertgasstrom (302) auf die Eine der Oberflächen (104) mittels eines ersten Zuführkanals (208) geleitet wird, und wobei ein zweiter Inertgasstrom (302) auf die Andere der Oberflächen (104) mittels eines zweiten Zuführkanals (210) geleitet wird.

8. Verfahren nach Anspruch 7, **dadurch gekennzeichnet, dass** der erste Inertgasstrom (302) und/oder der zweite Inertgasstrom (302) unter einem Winkel geneigt gegenüber der Normalen der Oberflächen (104) in dem Beschnittbereich (110) des Rohlings (102) auftrifft.

9. Verfahren nach Anspruch 8, **dadurch gekennzeichnet, dass** der erste Inertgasstrom (302) und/oder der zweite Inertgasstrom (302) bezüglich der Schnittlinie (108) nach innen geneigt und von dem entstehenden Beschnittabfall (112) abgewandt zugeleitet wird.

## Claims

1. A device (200) for the edge trimming of a blank (102) of a card-shaped identification, value or security document (100), wherein the blank (102) comprises at least two parallel surfaces (104) and a side edge (106) connecting the two surfaces (104) to one another,
with a holding device (202) for holding the blank (102) in such a way that the blank (102) remains free, at least in some areas, for the edge trimming, with a laser cutting device (204) which is designed to emit a laser beam (300) in such a way that it impinges in a focused manner on a predetermined cutting line (108) of a trimming region (110) of the blank (102),
and with an inert gas device (206) which is designed to supply at least one inert gas stream (302) to the trimming region (110),
wherein the inert gas device (206) comprises a first supply channel (208) for inert gas directed towards the one of the surfaces (104), the device being **characterized in that** the inert gas device (206) comprises a second supply channel (210) for inert gas directed towards the other of the surfaces (104).

2. The device (200) according to claim 1, **characterized in that** the first supply channel (208) and/or the second supply channel (210) is oriented in such a way that the inert gas stream (302) impinges in the trimming region (110) of the blank (102) at an angle inclined with respect to the normal of the surfaces (104).

3. The device (200) according to claim 2, **characterized in that** the first supply channel (208) and/or the second supply channel (210) is aligned in such a way that the inert gas stream (302) is fed inclined inwards with respect to the cutting line (108) and from a direction, which is oriented away from the resulting trimming waste (112).

4. The device (200) according to any one of claims 1 to 3, **characterized in that** an suction device (212) is present and designed to extract particles and/or gases on the side edge side.

5. The device (200) according to one of claims 1 to 4, **characterized in that** the holding device (202) and/or the laser cutting device (204) is assigned a drive device which is designed to effect a relative movement between the holding device (202) and the laser beam (300) for the edge trimming of the blank (102).

6. The device (200) according to any one of claims 1 to 5, **characterized in that** the first supply channel (208) and/or the second supply channel (210) of the inert gas device (206) is assigned an adjustable manipulation device which is designed in such a way that the inert gas stream (302) follows the focus of the laser beam (300) during the edge trimming.

7. A method for edge trimming of a blank (102) of a card-shaped identification, value or security document (100), wherein the blank (102) has at least two parallel surfaces (104) and a side edge (106) connecting the two surfaces (104) to one another, comprising the steps of:
- placing the blank (102) in a holding device (202) in such a way that the blank (102) remains free, at least in some areas, for the edge trimming,
- focusing a laser beam (300) emitted by a laser cutting device (204) in such a way that it impinges on a predetermined cutting line (108) of a trimming region (110) of the blank (102),
- simultaneously supplying an inert gas to the trimming region (110) by means of an inert gas device (206), wherein a first inert gas stream (302) is directed to the one of the surfaces (104) by means of a first supply channel (208), and wherein a second inert gas stream (302) is directed to the other of the surfaces (104) by means of a second supply channel (210).

8. The method according to claim 7, **characterized in that** the first inert gas stream (302) and/or the second inert gas stream (302) impinges at an angle inclined with respect to the normal of the surfaces (104) in the trimming region (110) of the blank (102).

9. The method according to claim 8, **characterized in that** the first inert gas stream (302) and/or the second inert gas stream (302) is fed inclined inwards with respect to the cutting line (108) and from a direction, which is oriented away from the resulting trimming waste (112).

## Revendications

1. Dispositif (200) pour le rognage de bord d'une ébauche (102) d'un document d'identité, de valeur ou de sécurité (100) en forme de carte, dans lequel l'ébauche (102) comprend au moins deux surfaces parallèles (104) et un bord latéral (106) connectant les deux surfaces (104) entre elles,
avec un dispositif de maintien (202) pour recevoir l'ébauche (102) de sorte que l'ébauche (102) reste libre au moins par zones pour le rognage de bord,
avec un dispositif de découpe laser (204) qui est conçu pour émettre un faisceau laser (300) de sorte qu'il heurte de manière focalisée une ligne de coupe (108) prédéfinie d'une zone de rognage (110) de l'ébauche (102),
ainsi qu'avec un dispositif de gaz inerte (206) qui est conçu pour amener au moins un flux de gaz inerte (302) à la zone de rognage (110),
dans lequel le dispositif de gaz inerte (206) comprend un premier canal d'alimentation (208) en gaz inerte orienté vers l'une des surfaces (104), le dispositif est **caractérisé en ce que** le dispositif de gaz inerte (206) comprend un second canal d'alimentation (210) en gaz inerte dirigé vers l'autre des surfaces (104).

2. Dispositif (200) selon la revendication 1, **caractérisé en ce que** le premier canal d'alimentation (208) et/ou le second canal d'alimentation (210) sont orientés de sorte que le flux de gaz inerte (302) arrive dans la zone de rognage (110) de l'ébauche (102) incliné d'un angle par rapport à la normale aux surfaces (104).

3. Dispositif (200) selon la revendication 2, **caractérisé en ce que** le premier canal d'alimentation (208) et/ou le second canal d'alimentation (210) sont orientés de sorte que le flux de gaz inerte (302) est dirigé vers l'intérieur par rapport à la ligne de coupe (108) et à l'opposé de la chute de rognage (112) résultante.

4. Dispositif (200) selon l'une quelconque des revendications 1 à 3, **caractérisé en ce qu'**un dispositif d'aspiration (212) est présent et conçu pour aspirer des particules et/ou des gaz côté bord latéral.

5. Dispositif (200) selon l'une quelconque des revendications 1 à 4, **caractérisé en ce qu'**un dispositif d'entraînement est associé au dispositif de maintien (202) et/ou au dispositif de découpe laser (204), qui est conçu pour le rognage de bord de l'ébauche (102) pour provoquer un mouvement relatif entre le dispositif de maintien (202) et le faisceau laser (300).

6. Dispositif (200) selon l'une quelconque des revendications 1 à 5, **caractérisé en ce que** le premier canal d'alimentation (208) et/ou le second canal d'alimentation (210) du dispositif de gaz inerte (206) est associé à un dispositif de manipulation réglable qui est conçu de sorte que le flux de gaz inerte (302) suit le foyer du faisceau laser (300) pendant le rognage de bord.

7. Procédé de rognage de bord d'une ébauche (102) d'un document d'identité, de valeur ou de sécurité (100) en forme de carte, dans lequel l'ébauche (102) présente au moins deux surfaces parallèles (104) et un bord latéral (106) connectant les deux surfaces (104) entre elles, comprenant les étapes consistant à :
- placer l'ébauche (102) dans un dispositif de maintien (202) de sorte que l'ébauche (102) reste libre au moins par zones pour le rognage de bord,
- focaliser un faisceau laser (300) émis par un dispositif de découpe laser (204) de sorte qu'il heurte une ligne de coupe (108) prédéfinie d'une zone de rognage (110) de l'ébauche (102),
- alimenter simultanément un gaz inerte à la zone de rognage (110) au moyen d'un dispositif de gaz inerte (206), dans lequel un premier flux de gaz inerte (302) est dirigé sur l'une des surfaces (104) au moyen d'un premier canal d'alimentation (208), et dans lequel un second flux de gaz inerte (302) est dirigé sur l'autre des surfaces (104) au moyen d'un second canal d'alimentation (210).

8. Procédé selon la revendication 7, **caractérisé en ce que** le premier flux de gaz inerte (302) et/ou le second flux de gaz inerte (302) arrive dans la zone de rognage (110) de l'ébauche (102) incliné d'un angle par rapport à la normale aux surfaces (104).

9. Procédé selon la revendication 8, **caractérisé en ce que** le premier flux de gaz inerte (302) et/ou le second flux de gaz inerte (302) sont amenés inclinés vers l'intérieur par rapport à la ligne de coupe (108) et orientés à l'opposé de la chute de rognage (112) résultante.
